# EUROPEAN PATENT APPLICATION

(11) **EP 3 104 291 A1**
(43) Date of publication of application: **14.12.2016**
(21) Application number: 15305876.3
(22) Date of filing: 09.06.2015
(51) Int. Cl.: G06F 21/14

(54) **DEVICE AND METHOD FOR PROTECTION OF IOS SOFTWARE MODULES**

(71) Applicant: Thomson Licensing, 92130 Issy-les-Moulineaux (FR)
(72) Inventor: MONSIFROT, Antoine, 35576 Cesson-Sévigné (FR); SALMON-LEGAGNEUR, Charles, 35576 Cesson-Sévigné (FR)
(74) Representative: Browaeys, Jean-Philippe

(57) **Abstract**

Protecting a module intended to be executed by an executing device (120) that has an operating system and that is either genuine or jailbroken. An application provider device obtains (S20) a first version of the module (320) intended to be executed on a genuine executing device, the first version implementing a first software protection technique allowed by the operating system on the genuine device, obtains (S22) a second version of the application (330) intended to be executed on a jailbroken device, the second version implementing a second software protection technique not allowed by the operating system on the genuine device, obtains (S24) a jailbreak detection function (310) configured to determine whether a device executing the jailbreak function (310) is genuine or jailbroken, and to call the first version of the module in case the executing device is genuine and call the second version of the module in case the executing device is jailbroken and generates (S25) an application package (300) including the jailbreak detection function (310), the first version of the module (320) and the second version of the module (330), and that is output (S26) by an interface (113). Also provided are the module provider device, the application package and a storage support (130) storing the application package.

## Description

### TECHNICAL FIELD

The present disclosure relates generally to software protection and in particular to protection of software to be run on iOS.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

iOS applications are protected against reverse engineering by encrypted distribution from the source to the iOS device on which they are to be installed. Once installed on the iOS device, the iOS itself protects the applications against dynamic analysis using isolation of processes and separation of privileges.

However, the protection only applies to iOS devices that have not been jailbroken. It is easy to use a GNU debugger (gdb) to dump the code of an application from a jailbroken device, as explained by Jonathan Zdziarski in "Hacking and Securing iOS Applications". A jailbroken device has been modified in order to obtain increased privileges that are not available on a device that has not been jailbroken.

It is thus not sufficient to rely on the protection provided by the iOS. But since the iOS does not allow any code modifications within installed applications, the only software protection mechanisms that can be used are integrity checks and Control Flow Graph (CFG) flattening, both of which are commonly used together. These software protection mechanisms are often needed since the encryption provided by the iOS is weak and the application also is vulnerable to reverse engineering using static analysis.

Then again, CFG flattening is only efficient against static attacks, not dynamic attacks, and Wurster et al. have shown that it is possible to circumvent integrity checks by running two code sections parallel, as described in "A Generic Attack on Checksumming-Based Software Tamper Resistance."

It will be appreciated that it is desired to have a solution that overcomes at least part of the conventional problems related to protection of iOS applications. The present principles provide such a solution.

### SUMMARY OF DISCLOSURE

In a first aspect, the present principles are directed to an application provider device for protecting a module intended to be executed by an executing device that has an operating system and that is either genuine or jailbroken. The application provider device includes a processing unit configured to obtain a first version of the module intended to be executed on a genuine executing device, the first version implementing a first software protection technique allowed by the operating system on the genuine device, obtain a second version of the module intended to be executed on a jailbroken device, the second version implementing a second software protection technique not allowed by the operating system on the genuine device, obtain a jailbreak detection function configured to determine whether the executing device is genuine or jailbroken, and to call the first version of the module in case the executing device is genuine and call the second version of the module in case the executing device is jailbroken, and generate an application package including the jailbreak detection function, the first version of the module and the second version of the module. The application provider device also includes an interface configured to output the application package.

Various embodiments of the first aspect include:
- That the processing unit is further configured to use the first software protection technique to protect the first version of the module. The first software protection technique can include at least one of control flow graph flattening and verification that the executing device is genuine.
- That the processing unit is further configured to use the second software protection technique to protect the second version of the module. The second software protection technique can be dynamic ciphering.

In a second aspect, the present principles are directed to a method for protecting a module intended to be executed by an executing device that has an operating system and that is either genuine or jailbroken. The method including at an application provider device obtaining, by a processing unit, a first version of the module intended to be executed on a genuine executing device, the first version implementing a first software protection technique allowed by the operating system on the genuine device, obtaining, by the processing unit, a second version of the module intended to be executed on a jailbroken device, the second version implementing a second software protection technique not allowed by the operating system on the genuine device, obtaining, by the processing unit, a jailbreak detection function configured to determine whether the executing device is genuine or jailbroken, and to call the first version of the module in case the executing device is genuine and call the second version of the module in case the executing device is jailbroken, generating, by the processing unit, an application package including the jailbreak detection function, the first version of the module and the second version of the module, and outputting, by an interface, the application package.

Various embodiments of the second aspect include:
- That the processing unit is further configured to use the first software protection technique to protect the first version of the module. The first software protection technique can include at least one of control flow graph flattening and verification that the executing device is genuine.
- That the processing unit is further configured to use the second software protection technique to protect the second version of the module. The second software protection technique can be dynamic ciphering.

In a third aspect, the present principles are directed to a computer program including program code instructions executable by a processor, the program code including a first version of a module intended to be executed on a genuine executing device, the first version implementing a first software protection technique allowed by an operating system on the genuine device, a second version of the module intended to be executed on a jailbroken device, the second version implementing a second software protection technique not allowed by the operating system on the genuine device, and a jailbreak detection function configured to determine whether a device executing the jailbreak function is genuine or jailbroken, and to call the first version of the module in case the executing device is genuine and call the second version of the module in case the executing device is jailbroken.

In a fourth aspect, the present principles are directed to a computer program product which is stored on a non-transitory computer readable medium and includes a first version of a module intended to be executed on a genuine executing device, the first version implementing a first software protection technique allowed by an operating system on the genuine device, a second version of the module intended to be executed on a jailbroken device, the second version implementing a second software protection technique not allowed by the operating system on the genuine device, and a jailbreak detection function configured to determine whether a device executing the jailbreak function is genuine or jailbroken, and to call the first version of the module in case the executing device is genuine and call the second version of the module in case the executing device is jailbroken.

In a fifth aspect, the present principles are directed to an executing device having an operating system, the executing device including memory storing a first version of a module intended to be executed on a genuine executing device and implementing a first software protection technique allowed by the operating system on the genuine device, a second version of the module intended to be executed on a jailbroken device and implementing a second software protection technique not allowed by the operating system on the genuine device, and a jailbreak detection function configured to determine whether the executing device the jailbreak function is genuine or jailbroken, and a processing unit configured to execute the jailbreak detection function to determine whether the executing device is genuine or jailbroken, and call the first version of the module in case it is determined that the executing device is genuine and call the second version of the module in case it is determined that the executing device is jailbroken.

### BRIEF DESCRIPTION OF DRAWINGS

Preferred features of the present principles will now be described, by way of non-limiting example, with reference to the accompanying drawings, in which
Figure 1 illustrates a system 100 implementing the present principles;
Figure 2 illustrates a method of generating a protected module according to the present principles; and
Figure 3 illustrates an application package according to the present principles.

### DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In the description, reference will be made to a module. This module includes executable code and can be a shared library, a portion of code inside an executable or a library, or even an entire application.

The method and devices of the present principles provide an application package including two versions of a module: one version to be executed on devices that are not jailbroken (hereinafter called "genuine devices") and one version to be executed on jailbroken devices. Each version implements the same functionality but are protected using different software protection mechanisms (although it will be understood that some software protection mechanisms may be shared by both versions.)

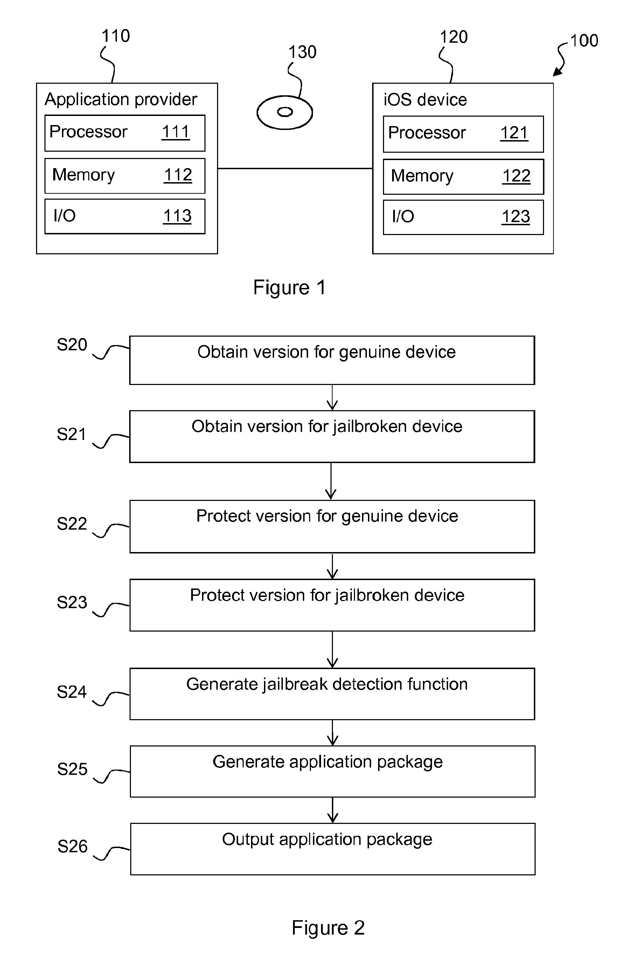

Figure 1 illustrates a system 100 implementing the present principles. The system 100 includes an application provider 110 configured to generate and provide, directly or indirectly, an iOS module to an iOS device 120 configured to execute the iOS module. The application provider 110 and the iOS device 120 includes at least one hardware processing unit ("processor") 111, 121, memory 112, 122 and at least one communications interface 113, 123 configured to communicate with the other device. The skilled person will appreciate that the illustrated devices are very simplified for reasons of clarity; as such, features like internal connections and power supplies are not illustrated. Non-transitory storage medium 130 stores the iOS module as further described hereinafter.

Figure 2 illustrates a method of generating a protected module according to the present principles. In step S20, the application provider obtains a version of the module to be executed on genuine devices and, in step S21, a version of the module to be executed on jailbroken devices. Each version refers only to itself (i.e. not to the other version) and is protected using specific software protection mechanisms depending on whether it is intended to be executed by a jailbroken device or a genuine device.

On genuine devices, user modules (i.e. modules downloaded by the user) run non-root. Debugging attacks are countered by the operating system, which applies default encryption, process isolation (sandboxing) for applications, and forbids attachment of debuggers from non-root applications. As the iOS provides protection against dynamic attacks, it may be sufficient for the application provider 110 to provide, in the code of the version for genuine devices itself, protection against static analysis, for example using CFG flattening. In addition, integrity checks can be used to protect the module.

On jailbroken devices, debugging or dynamic attacks are not prevented by the iOS, but at the same time, the modified system privileges of the iOS - such as the broken sandbox isolation, created by the jailbreak - enable the use of low-level software protections mechanisms, like dynamic code encryption (self-modifying code) and anti-debugging. This makes it possible for the application provider to include such software protection mechanisms in the version for jailbroken devices. The version for jailbroken device can thus be protected against dynamic attacks using for example dynamic ciphering and integrity checks.

In step S22, the application provider 110 applies at least one software protection technique allowed by the genuine iOS to the version for genuine devices to obtain a protected version for genuine devices and, in step S23, the application provider 110 applies at least one software protection technique specific to the jailbroken iOS (i.e., allowed by the jailbroken iOS but not by the genuine iOS) to the version for jailbroken devices to obtain a protected version for jailbroken devices. It is also possible that the versions obtained in steps S20 and S21 were already protected using these software protection methods when the versions where obtained.

The application provider 110 then generates, in step S24, a jailbreak detection function. The jailbreak detection function is capable of determining if the device on which it is executed is a genuine device or a jailbroken device. Since forking is not allowed on genuine devices, a jailbreak detection function can for example use fork() and check the returned process id to see if it has successfully forked, in which case it can be determined that the device is jailbroken. Similarly, calling system() with a null argument returns 1 on a jailbroken device and 0 on a genuine device, which also can enable determination of a jailbreak. Otherjailbreak detection functions are described by Zdziarski in "Hacking and Securing iOS Applications". It is preferred that the jailbreak detection function use a plurality of different methods of detecting a jailbreak.

It is preferred that the jailbreak detection function is inserted also into the code of the version for genuine devices so that the detection is performed also during execution of this version. The jailbreak detection functions inside the genuine version are preferably protected by integrity checks, and are configured to alter the execution flow in case it is determined that the executing device is jailbroken. The insertion of the jailbreak detection functions into the genuine version can be performed at this point or earlier, when protecting the genuine version.

The application provider 110 then generates, in step S25, an application package including the jailbreak detection function, the version for use on genuine devices and the version for use on jailbroken device, wherein the jailbreak detection function calls the proper version depending on the jailbreak status - i.e., genuine or jailbroken - of the executing device. In step S26, the application provider 110 outputs the application package, either directly to the iOS device 120 or to an intermediate store (not shown).

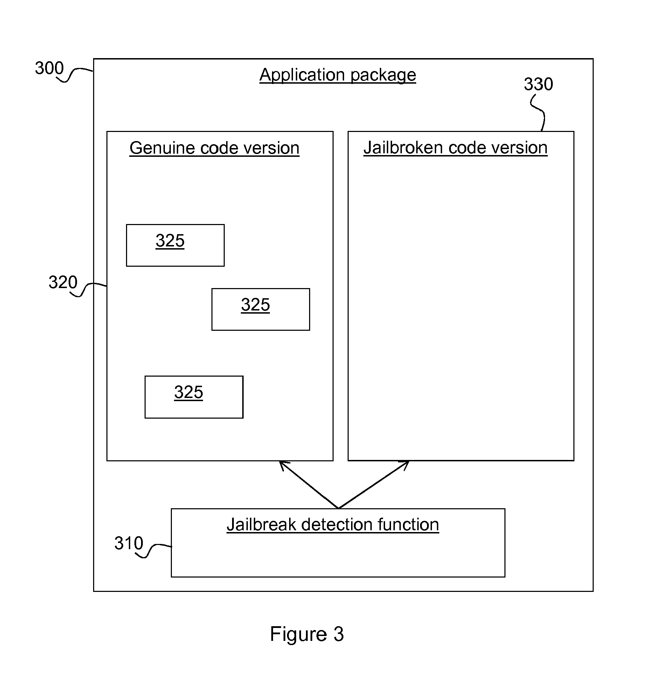

Figure 3 illustrates an application package 300 according to the present principles including a jailbreak detection function 310 configured to determine the jailbreak status of the executing device and then call the genuine version 320 or the jailbroken version 330 of the application. The code of the genuine version includes a plurality of jailbreak detection functions 325, as described.

In Figure 3, the application package 300 is shown as having three modules: jailbreak detection function 310 and the two versions 320, 330 of the module. It will be understood that the three modules can be part of a single application that, during execution, arrives at the jailbreak detection function 310, which then determines which version to execute.

In a variant, the application package includes three applications, wherein each application includes one of the jailbreak detection function and the two versions. The application including the jailbreak detection function is the first to be executed and it calls one of the other two applications depending on the outcome of the determination of whether the device is jailbroken or not.

It will thus be appreciated that the present principles provide a solution for software protection of iOS software modules that, at least in certain cases, can improve on the conventional protection methods. In particular, depending on the embodiment, the present principles can make it possible to distribute the same application package to genuine devices and to jailbroken devices.

The present principles have been described for use with iOS as it is believed that this is where they can provide the most interesting use. However, it will be understood that the present principles can be used for other (secure) operating systems such as Android, especially if they limit writing permissions in the memory pages.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. An application provider device (110) for protecting a module intended to be executed by an executing device (120) that has an operating system and that is either genuine or jailbroken, the application provider device comprising:
- a processing unit (111) configured to:
obtain a first version of the module (320) intended to be executed on a genuine executing device, the first version implementing a first software protection technique allowed by the operating system on the genuine device;
obtain a second version of the module (330) intended to be executed on a jailbroken device, the second version implementing a second software protection technique not allowed by the operating system on the genuine device;
obtain a jailbreak detection function (310) configured to determine whether the executing device is genuine or jailbroken, and to call the first version of the module in case the executing device is genuine and call the second version of the module in case the executing device is jailbroken; and
generate an application package (300) comprising the jailbreak detection function (310), the first version of the module (320) and the second version of the module (330); and
- an interface (113) configured to output the application package.

2. The application provider device (110) of claim 1, wherein the processing unit (111) is further configured to use the first software protection technique to protect the first version of the module (320).

3. The application provider device (110) of claim 2, wherein the first software protection technique comprises at least one of control flow graph flattening and verification that the executing device is genuine.

4. The application provider device (110) of claim 1, wherein the processing unit (111) is further configured to use the second software protection technique to protect the second version of the module (320).

5. The application provider device (110) of claim 4, wherein the second software protection technique is dynamic ciphering.

6. A method for protecting a module intended to be executed by an executing device (120) that has an operating system and that is either genuine or jailbroken, the method comprising at an application provider device:
obtaining (S20), by a processing unit (111), a first version of the module (320) intended to be executed on a genuine executing device, the first version implementing a first software protection technique allowed by the operating system on the genuine device;
obtaining (S22), by the processing unit (111), a second version of the module (330) intended to be executed on a jailbroken device, the second version implementing a second software protection technique not allowed by the operating system on the genuine device;
obtaining (S24), by the processing unit (111), a jailbreak detection function (310) configured to determine whether the executing device is genuine or jailbroken, and to call the first version of the module in case the executing device is genuine and call the second version of the module in case the executing device is jailbroken;
generating (S25), by the processing unit (111), an application package (300) comprising the jailbreak detection function (310), the first version of the module (320) and the second version of the module (330); and
outputting (S26), by an interface (113), the application package.

7. The method of claim 6, further comprising using (S21), by the processing unit (111), the first software protection technique to protect the first version of the module (320).

8. The method of claim 7, wherein the first software protection technique comprises at least one of control flow graph flattening and verification that the executing device is genuine.

9. The method of claim 6, further comprising using (S23), by the processing unit (111), the second software protection technique to protect the second version of the module (320).

10. The method of claim 9, wherein the second software protection technique is dynamic ciphering.

11. Computer program comprising program code instructions executable by a processor, the program code comprising:
a first version of a module (320) intended to be executed on a genuine executing device, the first version implementing a first software protection technique allowed by an operating system on the genuine device;
a second version of the module (330) intended to be executed on a jailbroken device, the second version implementing a second software protection technique not allowed by the operating system on the genuine device; and
a jailbreak detection function (310) configured to determine whether a device executing the jailbreak function (310) is genuine or jailbroken, and to call the first version of the module in case the executing device is genuine and call the second version of the module in case the executing device is jailbroken.

12. Computer program product which is stored on a non-transitory computer readable medium and comprises:
a first version of a module (320) intended to be executed on a genuine executing device, the first version implementing a first software protection technique allowed by an operating system on the genuine device;
a second version of the module (330) intended to be executed on a jailbroken device, the second version implementing a second software protection technique not allowed by the operating system on the genuine device; and
a jailbreak detection function (310) configured to determine whether a device executing the jailbreak function (310) is genuine or jailbroken, and to call the first version of the module in case the executing device is genuine and call the second version of the module in case the executing device is jailbroken.

13. An executing device (120) having an operating system, the executing device comprising:
- memory (122) storing a first version of a module (320) intended to be executed on a genuine executing device and implementing a first software protection technique allowed by the operating system on the genuine device, a second version of the module (330) intended to be executed on a jailbroken device and implementing a second software protection technique not allowed by the operating system on the genuine device, and a jailbreak detection function (310) configured to determine whether the executing device the jailbreak function (310) is genuine or jailbroken; and
- a processing unit (121) configured to:
execute the jailbreak detection function (310) to determine whether the executing device is genuine or jailbroken; and
call the first version of the module in case it is determined that the executing device is genuine and call the second version of the module in case it is determined that the executing device is jailbroken.
